# EUROPEAN PATENT SPECIFICATION

(11) **EP 3 041 910 B1**
(45) Date of publication and mention of the grant of the patent: **18.03.2020**
(21) Application number: 14843030.9
(22) Date of filing: 30.07.2014
(51) Int. Cl.: C09K 8/00, C09K 8/02

(54) **FLUID COMPOSITION COMPRISING CROSSLINKED POLYVINYLPYRROLIDONE FOR OIL FIELD APPLICATIONS**
FLÜSSIGKEITSZUSAMMENSETZUNG MIT VERNETZTEM POLYVINYLPYRROLIDON FÜR ÖLFELDANWENDUNGEN
COMPOSITION DE FLUIDE COMPRENANT DE LA POLYVINYLPYRROLIDONE RÉTICULÉE POUR DES APPLICATIONS EN CHAMP PÉTROLIFÈRE

(30) Priority: 06.09.2013 US 201361874928 P
(43) Date of publication of application: 13.07.2016
(73) Proprietor: ISP Investments LLC, Wilmington, DE 19805 (US)
(72) Inventor: WANG, Janice Jianzhao, Hockessin, DE 19707 (US); MELBOUCI, Mohand, Wilmington, DE 19808 (US); LEI, Cuiyue, Wayne, NJ 07470 (US); MUSA, Osama M., Kinnelon, NJ 07405 (US)
(74) Representative: Kutzenberger Wolff & Partner
(86) International application number: PCT/US2014/048913
(87) International publication number: WO 2015/034601

(56) References cited:
- WO-A1-2006/111708
- WO-A1-2007/010212
- WO-A1-2010/112866
- WO-A1-2012/061147
- WO-A1-2012/152889
- US-A- 4 792 412
- US-A- 5 252 611

## Description

### FILED OF THE INVENTION

The present application relates to oil-well servicing fluids compositions, and more particularly, relates to a High-Temperature-High-Pressure (HTHP) stable fluid compositions and its applications in water based HTHP drill-in and completion and workover fluids, a process for preparing the same and a method of use.

### BACKGROUND OF THE INVENTION

Drilling fluids used in drilling a well in a subterranean formation comprise gaseous or liquid, and mixtures of fluids and solids including solid suspensions, mixtures and emulsions of liquids, gases and solids used to drill well bores into subterranean formations. Such fluids are primarily employed to cool the drill bit, lubricate the rotating drill pipe to prevent it from sticking to the walls of the well bore, and prevent blowouts by serving as a hydrostatic head to counteract the sudden entrance into the well bore of high pressure formation fluids, and remove drill cuttings from the well bore.

Further, the drilling fluids are utilized when drilling a wellbore through rock formations in order to sweep the rock cuttings created at the bit up to the surface where they are removed. To control downhole pressures, the fluid's density is usually increased by adding a powdered dense mineral. The fluid can exhibit sufficient viscosity to provide efficient cuttings removal (hole-cleaning), and sufficient gel strength for the stable suspension of the mineral. Drilling fluids can also exhibit a low filtration rate in order to lessen the possibility of differential sticking.

Drill-in fluids are employed for drilling through the reservoir section of a subterranean formation. Drill-in fluids can be used, for example, but not by way of limitation (i) to drill the reservoir zone satisfactorily, which is either a vertical or a long, horizontal drain hole; (ii) to minimize the damage of the near-wellbore region and maximize the production of exposed zones, and (iii) to facilitate the necessary well completion. The drill-in fluids may resemble completion fluids. Drill-in fluids may be brines containing selected solids of appropriate particle size ranges (for instance, salt crystals or calcium carbonate) and polymers. Usually, only additives needed for filtration control and cuttings carrying are present in drill-in fluids.

Completion fluids are utilized during operations that take place in the so-called completion phase of wellbore construction, which is after drilling the wellbore and before commencement of production of fluids into the wellbore (or before injection of fluids from the wellbore into a rock formation). A completion fluid is placed in the well to facilitate final operations prior to initiation of production, such as setting screens production liners, packers, downhole valves or shooting perforations into the producing zone. The fluid is meant to control a well should downhole hardware fail, without damaging the producing formation or completion components. Completion fluids are typically brines (chlorides, bromides and formates), but in theory could be any fluid of proper density and flow characteristics. The fluids should be chemically compatible with the reservoir formation fluids, and are typically filtered to avoid introducing solids to the near-wellbore area.

During drilling operation, the workover is referred to the repair of an existing production well for the purpose of restoring, prolonging or enhancing the production of hydrocarbons. A workover fluid, typically a brine, is used during workover operations. Since the wellbore is in contact with the reservoir during most workover operation, workover fluids should be clean and chemically compatible with the reservoir fluids and formation matrix.

US Publication No. 20060234875 assigned to Halliburton Energy Services Inc. discloses a wellbore treatment kit that includes a polymeric solution for placement in a wellbore that penetrates a subterranean formation and an activator for causing a polymer to precipitate out of the polymeric solution when it contacts the polymeric solution, wherein the resulting precipitate is capable of at least partially blocking a flow of a wellbore servicing fluid into the subterranean formation. The wellbore servicing fluid may be, for example, a drilling fluid, a cement composition, a workover fluid, or combinations thereof. The polymeric solution may comprise, for example, a poly vinyl pyrrolidone aqueous solution, and the activator may comprise, for example, formate brine. When desirable, the precipitate may be easily and quickly removed from the subterranean formation by dissolving it in fresh water. US Patent No. 4,792,412 assigned to Mobil Oil Corporation discloses an aqueous brine fluid containing a high salt concentration and a polyvinylpyrrolidone polymer or copolymer which serves to increase the viscosity thereof, particularly at elevated temperatures of above about 300 DEG F. These fluids are particularly useful as drilling fluids for the drilling of oil and gas wells.

WO20060234875 assigned to Halliburton Energy Services Inc. discloses a crosslinkable polymer composition that comprises an aqueous fluid; a water-soluble polymer comprising carbonyl groups; an organic crosslinking agent capable of crosslinking the water-soluble polymer comprising carbonyl groups; and a water-soluble carbonate retarder. Also provided are methods comprising: providing the crosslinkable polymer composition; introducing the crosslinkable polymer composition into a portion of the subterranean formation; and allowing the crosslinkable polymer composition to form a crosslinked gel in the portion of the subterranean formation.

US Patent No. 7322414B2 assigned to Halliburton Energy Services Inc. discloses crosslinkable-polymer compositions that may be useful for, among other things, reducing, stopping, or diverting the flow of fluids in subterranean formations. The crosslinkable-polymer compositions may comprise an aqueous fluid, a chitosan-reacting polymer, chitosan, and a gelation-retarding additive comprising an acid derivative. Various methods of use are also provided.

US Patent No. 7833945B2 assigned to Halliburton Energy Services Inc. discloses additives and treatment fluids with improved shale inhibition, and associated methods of use in subterranean operations. The additives and treatment fluids used generally comprise a shale-inhibiting component and one or more silicates. Further, the patent claims a subterranean treatment fluid comprising: an aqueous base fluid; a shale-inhibiting component that comprises a nanoparticle source comprising a heterocyclic compound comprising nitrogen, wherein at least a portion of the nanoparticle source comprises nanoparticles having an average particle size of less than about 400 nanometers; and one or more silicates selected from the group consisting of sodium silicate and potassium silicate.

US Patent No. 7549474B2 assigned to Halliburton Energy Services Inc. claims a method of servicing a wellbore in contact with a subterranean formation comprising: placing an aqueous composition comprising a mud displacement fluid and a clay inhibitor into the wellbore wherein the clay inhibitor is a nonionic polyacrylamide, a low molecular weight nonionic polyacrylamide, a high molecular weight nonionic polyacrylamide a polymeric heterocyclic nitrogen-containing compound, polyvinyl pyrrolidone or combinations thereof.

In view of the foregoing, it is an object of the present application to provide a high performance synthetic thickening polymer which is (i) capable of providing required thickening or rheological properties at high temperatures *i.e.* above 148.89°C [300°F] and high pressures; and (ii) compatible for brine and water based oil-well servicing operations such as drill-in, completion, and workover under HTHP conditions.

Surprisingly, we have found that a strongly swellable, moderately crosslinked polyvinyl pyrrolidone (PVP) polymer is able to provide the required high performance thickening properties which is suitable for HTHP water and brine based oil-well servicing fluids. Such polymer may be used alone or in combination with other at least one HTHP or non-HTHP based Rheology Modifiers (RMs), Fluid Loss Additives (FLAs) and/or dispersants that are known in the arts.

### SUMMARY OF THE INVENTION

The present application discloses a water based High-Temperature High-Pressure (HTHP) fluid composition having a density of about 994.56 [8.3] to about 2516.35 kg/m³ [21.0 *ppg*], comprising: (i) a brine based fluid; (ii) about 1.43 kg/m³ [0.5 *ppb*] to about 57.00 kg/m³ [*20 ppb*] of crosslinked polyvinylpyrrolidone (PVP); (iii) about 14.25 kg/m³ [5 *ppb*] to about 285.00 kg/m³ [100 *ppb*] of bridging agents selected from the group consisting of CaCO₃ and sized salts; and (iv) optionally about 0 kg/m³ [0 *ppb*] to about 71.25 kg/m³ [25 *ppb*] of Fluids Loss Additives (FLA), wherein the HTHP fluid composition is employed as a drill-in fluid composition, a completion fluid composition or a workover fluid composition.

Another aspect of the present application is to employ HTHP fluid composition in drilling/completion/workover fluid compositions comprising crosslinked PVP which is capable of providing required stability in High-Temperature-High-Pressure (HTHP) based oil-well servicing field operations having a temperature of 121.11°C [250°F] or above.

An important aspect of the present application provides a HTHP fluid composition comprising crosslinked polyvinylpyrrolidone (PVP) as a thickener or thickening agent in the form of fine white powder for water based oil-well servicing fluids. The crosslinked PVP, thickener is prepared by precipitation polymerization of vinylpyrrolidone (VP) in an organic solvent in the presence of a crosslinking agent and a free radical polymerization initiator, wherein the crosslinking agent is present in an amount of from about 0.1 wt. % to about 5.0 wt. % based on the weight of the vinylpyrrolidone.

One another aspect of the present application provides (i) a method for drilling into a producing zone with limited formation damage in a subterranean formation; and (ii) a method for conducting a completion operation in a subterranean formation.

### DETAILED DESCRIPTION OF THE INVENTION

While this specification concludes with claims particularly pointing out and distinctly claiming that, which is regarded as the invention it is anticipated that the invention can be more readily understood through reading the following detailed description of the invention and study of the included examples.

By the term "comprising" herein is meant that various optional, compatible components can be used in the compositions herein, provided that the important ingredients are present in the suitable form and concentrations. The term "comprising" thus encompasses and includes the more restrictive terms "consisting of" and "consisting essentially of" which can be used to characterize the essential ingredients such as water, brine, thickener, rheology modifier (RM), HTHP or non-HTHP based Fluid Loss Additive (FLA), bridging agent of the present application.

All references to singular characteristics or limitations of the present invention shall include the corresponding plural characteristic or limitation, and *vice-versa*, unless otherwise specified or dearly implied to the contrary by the context in which the reference is made.

Numerical ranges as used herein are intended to include every number and subset of numbers contained within that range, whether specifically disclosed or not. Further, these numerical ranges should be construed as providing support for a claim directed to any number or subset of numbers in that range.

As used herein, the words "preferred," "preferably" and variants refer to embodiments of the invention that afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

References herein to "one embodiment," "one aspect", "one version" or "one objective" of the invention include one or more such embodiment, aspect, version or objective, unless the context clearly dictates otherwise.

The unit "pounds per barrel" can also be specified as "*ppb*" or "*lbm*/*bbl*", and wherein one *lbm*/*bbl* or *ppb* is the equivalent of 0.454 kg [one pound] of additive in 0.159 m³ [42 US gallons] of mud. The "m" is used to denote mass to avoid possible confusion with pounds force (denoted by "*lbf*"). In SI units, the conversion factor is one pound per barrel equals 2.85 kilograms per cubic meter. For example, 10 *lbm*/*bbl* = 28.5 *kg*/*m³.*

The term "crosslinked" herein refers to a composition containing intra-molecular and/or intermolecular crosslinks, whether arising through a covalent or non-covalent bonding. "Non-covalent" bonding includes both hydrogen bonding and electrostatic (*ionic*) bonding.

The term "monomer" refers to the repeat units that comprise a polymer. A monomer is a compound that chemically bonds to other molecules, including other monomers, to form a polymer.

The term "polymer" refers to both linear and branched polymers derived from one or more monomer units, which may or may not be crosslinked, or grafted. Non-limiting examples of polymers include copolymers, terpolymers, tetramers, and the like, wherein the polymer is random, block, or alternating polymer.

What is described herein, according to the invention, is a water based High-Temperature High-Pressure (HTHP) fluid composition having a density of 994.56 [8.3] to 2516.35 kg/m³ [21.0 *ppg*], comprising: (i) a brine based fluid; (ii) 1.43 kg/m³ [0.5 *ppb*] to 57.00 kg/m³ [20 *ppb*] of crosslinked polyvinylpyrrolidone (PVP); (iii) 14.25 kg/m³ [5 *ppb*] to 285.00 kg/m³ [100 *ppb*] of bridging agents selected from the group consisting of CaCO₃ and sized salts; and (iv) optionally 0 kg/m³ [0 *ppb*] to 71.25 kg/m³ [25 *ppb*] of Fluids Loss Additives (FLA), wherein the crosslinked PVP is prepared by precipitation polymerization of vinylpyrrolidone (VP) in an organic solvent in the presence of a crosslinking agent and a free radical polymerization initiator, wherein the crosslinking agent is present in an amount of from 0.1 wt. % to 5.0 wt. % based on the weight of the vinylpyrrolidone. Also discloses a method of drilling and completing operations in a subterranean formation.

According to the present application, it is directed to provide a thermally-stable polymer, *i.e*. crosslinked PVP suitable for HTHP based conditions. HTHP refers generally to wells that are hotter and/or at higher pressures than most wells. In accordance with some aspects, HTHP may refer to a well having an undisturbed bottom-hole temperature of greater than 300°F (149°C) and a bottom-hole pressure of at least 5000 *psi* (∼34.5 *Mpa*).

According to one embodiment of the present application, it is provided with strongly swellable, moderately crosslinked PVP polymers obtained directly as fine powders by precipitation polymerization of vinyl pyrrolidone in the presence of predetermined amount of a multifunctional crosslinking agent and a free radical initiator in an organic solvent, and wherein the crosslinked PVP has a Brookfield viscosity at least about 500 [500] to about 50000 mPas [50,000 *cps*] in 4% aqueous solution. The preferred viscosity ranges of the crosslinked PVP in the present application can be varied from about 500 [500] to about 50000 mPas [50,000 *cps*] or from about 800 [800] to about 20000 mPas [20,000 *cps*] or from about 1000 [1000] to about 10000 mPas [10,000 *cps*]. The Brookfield viscosity can be measured at 2.5, 5, 10, 12, 20, 30, or 50 RPM and at 25 °C.

The crosslinked PVP polymer, a thickener of the present application can be prepared according to granted US Patent No. 5,073,614, and US Patent No. 5,130,388 assigned to ISP Investments *Inc.* The teachings of these references are advantageously explored and employed for the purposes of the present application.

It is contemplated to employ any other possible polymerization methods known in the art, which can provide strongly swellable, moderately crosslinked PVP as fine white powder. Such polymerization methods can include, but are not limited to, precipitation polymerization, inverse emulsion polymerization, gel polymerization, dispersion polymerization, solution polymerization, emulsion polymerization, bulk polymerization, suspension polymerization, Liquid dispersion polymerization (LDP) and ionic polymerization.

Other preferred polymerization techniques employed to prepare the polymer of the present application are duly disclosed in (1) "Principles of Polymerization" 4th edition, 2004, Wiley by George Odian and (2) WO2012061147A1 assigned to ISP Investments Inc.. Further, the polymerization of the present application may optionally require suitable catalysts or initiators, stabilizers, salts, pH adjusting agents, co-dispersants, thickeners, solvents, acidic agents, basic agents, and/or photoinitiators depending on type of polymerization technique being employed, and one skilled in the art can easily derive such information from the relevant literature known in the art or from "Principles of Polymerization" 4th edition, 2004, Wiley by George Odian.

The polymerization temperature for preparing crosslinked PVP can be ranged from 40° to 150°C, and other preferred temperature ranges are 55° to 100°C; or 60° to 80°C.

In accordance with the present application, strongly swellable, moderately crosslinked PVP polymers can be prepared directly in the form of fine, white powders by precipitation polymerization of vinylpyrrolidone in the presence of a predetermined amount of a crosslinking agent and a free radical polymerization initiator in an organic solvent, preferably an aliphatic hydrocarbon, *e.g.* a C₃-C₁₀ saturated, branched or unbranched, cyclic or acyclic aliphatic hydrocarbon, and most preferably cyclohexane or heptane, or mixtures thereof.

The amount of solvent used for preparing the crosslinked PVP of the present application should be sufficient to dissolve the reactants and to maintain the polymer precipitate in a stirrable state at the end of the polymerization. Generally, the amount of the solvent can be ranged from about 10 to 50 wt% solids, preferably 15-40 wt% solids, or 17-30 wt% solids, or 17-25 wt% solids.

Suitable crosslinking agents for preparing the crosslinked PVP comprise at least two olefinic double bonds. Examples of the crosslinking agents are selected from the group consisting of N,*N*'-divinylimidazolidone (*DVI*), N,N',N"-triallyl-triazine-trione, methyene-*bis*-acryamide, methyl*ene*-*bi*s-(meth)acrylamide, triallyl *ami*ne, triallylglucose, ethyleneglycol-*di*-(meth)acrylate, diethyleneglycol-*di*-(meth)acrylate, triethyleneglycol-*di-*(*m*eth)acrylate, tetraethyleneglycol-*di*-(meth)acrylate, polyethyleneg*l*ycol-*di*-(meth)acrylate, pentae*ry*thritol-*tri*-allylether, pentaerythritol-*di*-allylether, penta*er*ythritol-*tetra*-allylether, pentaerythri*tol*-*di*-(meth)acrylate, pentaerythritol tri(meth)acrylate, pentaerythritol-*tetra-*(meth)acrylate, 1-vinyl-3-(E)-ethylidene-pyrrolidone (EVP), allyl methacrylamide, allyl glycidyl ether, glycidyl acrylate, hydroxyacrylamide, triallyl-1,3,5-triazine-2,4,6(1H,3H,5H)-trione, 2,4,6-triallyloxy-1,3,5-triazine and/or divinylbenzene. Preferred crosslinking agent for preparing the crosslinked PVP of the present application is selected from the group consisting of N,N'-N,N'-divinylimidazolidone (DVI), pentaerythritol-tri-allylether, triallyl-1,3,5-triazine-2,4,6(1H,3H,5H)-trione and 2,4,6-triallyloxy-1,3,5-triazine. The amount of crosslinking agent can be changed from about 0.1 to about 5% by weight of vinyl pyrrolidone. In one non-limiting embodiment, the crosslinking agent is present in an amount of from about 0.3 wt. % to about 1.0 wt. % based on the weight of the vinylpyrrolidone. In another non-limiting embodiment, the crosslinking agent is present in an amount of from about 0.4 wt. % to about 0.8 wt. % based on the weight of the vinylpyrrolidone.

According to one embodiment of the present application, the precipitation polymerization can be carried out in the presence of a suitable free radical polymerization initiator. Such free radical initiators can include, but are not limited to, various derivatives of peroxides, peresters and/or azo compounds. Examples of the free radical initiators can include, but are not limited to, dicumyl peroxide, dibenzoyl peroxide, 2-butanone peroxide, tert-butyl perbenzoate, di-tert-butyl peroxide, 2,5-bis(tert-butylperoxy)-2,5-dimethylhexane, bis(tert-butyl peroxyisopropyl)benzene, and tert-butyl hydroperoxide), diacyl peroxides, cumene hydroperoxide, dialkyl peroxides, hydroperoxides, ketone peroxides, monoperoxycarbonates, peroxydicarbonates, peroxyesters, and peroxyketals, including tertiary butyl perbenzoate, tertiary butyl peroctoate in diallyl phthalate, diacetyl peroxide in dimethyl phthalate, dibenzoyl peroxide, 1-hydroxy cyclohexyl-1-phenyl ketone, bis (2,4,6-trimethyl benzoyl)phenyl phosphine, benzoin ethyl ether, 2,2-dimethoxy-2-phenyl acetophenone, di(p-chlorobenzoyl) peroxide in dibutyl phthalate, di(2,4-dichlorobenzoyl) peroxide with dibutyl phthalate, dilauroyl peroxide, methyl ethyl ketone peroxide, cyclohexanone peroxide in dibutyl phthalate, 3,5-dihydroxy-3,4-dimethyl-1,2-dioxacyclopentane, t-butylperoxy(2-ethyl hexanoate), caprylyl peroxide, 2,5-dimethyl-2,5-di(benzoyl peroxy) hexane, 1-hydroxy cyclohexyl hydroperoxide-1, t-butyl peroxy (2-ethyl butyrate), 2,5-dimethyl-2,5-bis(t-butyl peroxy) hexane, cumyl hydroperoxide, diacetyl peroxide, t-butyl hydroperoxide, ditertiary butyl peroxide, 3,5-dihydroxy-3,5-dimethyl-1,2-oxacyclopentane, and 1,1-bis(t-butyl peroxy)-3,3,5-trimethyl cyclohexane and di-(4-t-butyl cyclohexyl) peroxydicarbonate, azo compounds such as azobisisobutyronitrile and azobiscyclohexanenitrile (e.g., 2,2'-azobis(2-methylpropanenitrile), 2,2'-azobis(2-methylbutanenitrile), and 1,1'-azobis(cyclohexanecarbonitrile)) and the like mixtures.

The preferred initiators can include acyl peroxides such as diacetyl peroxide, dibenzoyl peroxide and dilauryl peroxide; peresters such as t-butylperoxy pivalate, tert-butyl peroxy-2-ethylhexanoate; peroxides such as di-tert-butyl peroxide; percarbonates such as dicyclohexyl peroxydicarbonate; and azo compounds such as 2,2'-azobis-(isobutyronitrile), 2,2'-azobis-(2,4-dimethylvaleronitrile), 1,1'-azobis-(cyanocyclohexane), and 2,2'-azobis-(methylbutyronitrile).

A particularly preferred embodiment of the present application discloses a stable water based High-Temperature-High-Pressure (HTHP) drill-in fluids composition having a density of 994.56 [8.3] to about 2516.35 kg/m³ [21.0 *ppg*], comprising: (i) brine based fluids; (ii) about 1.43 kg/m³ [0.5 *ppb*] to about 57.00 kg/m³ [20 *ppb*] of crosslinked PVP as thickeners; (iii) about 14.25 kg/m³ [5 *ppb*] to about 285.00 kg/m³ [100 *ppb*] of bridging agents are CaCO₃ or sized salts; and (iv) optionally about 0 kg/m³ [0 *ppb]* to about 71.25 kg/m³ [25 *ppb*] of HTHP or non-HTHP based Fluid Loss Additives (FLA).

Bridging agent used in the present application can be CaCO₃ and/or sized salts. Commercially available CaCO₃ used in the present application can include, but are not limited to, Baracarb® 5, 25, 50, 150, 400, 600 and 1200, which is available from Halliburton Company.

Sized salts of the present application can include, but are not limited to, sodium chloride, potassium chloride, calcium chloride, sodium formate, potassium formate, sodium bromide, potassium bromide, calcium bromide, sodium acetate, potassium acetate, and the like. The preferred sized salt is sodium chloride. Further, the sized salts have a particle size in a range of approximately 1 µm [1 micron] to approximately 10000 µm [10,000 microns]. For a sized salt fine grade, a particle size can be in a range of approximately 1 µm [1 micron] to approximately 800 µm [800 microns]. For a sized salt medium grade, a particle size can be in a range of approximately 100 µm [100 micron] to approximately 1500 µm [1,500 microns]. For a sized salt coarse grade, a particle size can be in a range of approximately 1000 µm [1,000 micron] to approximately 10000 µm [10,000 microns].

Another embodiment of the present application provides a stable water based High-Temperature High-Pressure (HTHP) completion and workover fluid compositions having a density of 994.56 to 2516.35 kg/m³ [*8*.3 to 21.0 *ppg*]*,* comprising: (i) brine based fluids; (ii) about 1.43 kg/m³ [0.*5 ppb*] to a*bou*t 57.00 kg/m³ [20 *ppb*] of crosslinked PVP as thickener; and (iii) optionally about 14.25 kg/m³ [5 *ppb*] to 285.00 kg/m³ [100 *ppb*] bridging agent.

The aqueous drill-in/completion/workover fluid composition of the present application can employ either (i) fresh water or (ii) a suitable brine solution as a base fluid during drilling operations. The fluid composition of the present application may also comprise seawater or a solution of a salt or a solution of a combination of salts required thereof.

Generally, the brine based fluid of the present application is present in a sufficient amount to achieve the density of from about 994.56 to 2516.35 kg/m³ [8.3 to 21.0 *ppg*]. The brine based fluid may be an aqueous solution of one or more density-increasing water-soluble salt. The density increasing water-soluble salt may be selected from the group consisting of alkali metal halides (for example, sodium chloride, sodium bromide, potassium chloride, potassium bromide, magnesium chloride, ammonium chloride) alkali metal carboxylates (for example, sodium formate, potassium formate, caesium formate, sodium acetate, potassium acetate or caesium acetate), sodium carbonate, potassium carbonate, alkaline earth metal halides (for example, calcium chloride and calcium bromide), and zinc halide salts (zinc chloride, zinc bromide) and mixtures thereof. The salt for preparing the brine based fluid of the present application is selected from the group consisting of sodium chloride, potassium chloride, calcium chloride, magnesium chloride, ammonium chloride, zinc chloride, sodium bromide, calcium bromide, zinc bromide, potassium formate, cesium formate, sodium formate and mixtures thereof.

One preferred embodiment of the present application discloses a stable water based High-Temperature-High-Pressure (HTHP) drill-in/completion/workover fluid composition comprising a Fluid Loss Additive (FLA) which is stable and compatible for HTHP and non-HTHP based oil-well servicing applications. Suitable Fluid Loss Additives of the present application can include, but are not limited to, Polydrill, Alcomer® 242 and Alcomer® 507 (available from BASF); KEM-SEAL (available from Baker Hughes); DURALON (available from MI-Swaco); DRISCAL® D (available from Drilling Specialties Company); Hostadrill® (available from Clariant Oil Servies); Therma-chek® (available from Halliburton Company); terpolymer of acrylamide (AM)/2-acrylamido-2-methyl propanesulfonic acid (AMPS)/cationic monomers; carboxymethyl cellulose; carboxy methyl hydroxy ethyl cellulose; lignite; xanthan gum; starch; hydroxy ethyl methyl cellulose; hydroxy propyl methyl cellulose; hydroxy ethyl cellulose; guar gum; hydroxy propyl guar; carboxy methyl hydroxy propyl guar;, hydroxy ethyl guar; and mixtures thereof.

The Fluid Loss Additive (FLA) described herein typically has a weight average molecular weight (MW) over 3000 u [3,000 daltons], particularly over 10000 u [10,000] daltons, and more particularly over 100000 u [100,000 daltons]. In one non-limiting embodiment, the weight average molecular weight is in a range of from 5000 [5,000] to 5000000 u [5,000,000 daltons]. In another non-limiting embodiment, the weight average molecular weight is in a range of from 10000 to 500000 u [10,000 to 500,000 daltons]. In yet another non-limiting embodiment, the weight average molecular weight is in a range of from 50000 to 400000 u [50,000 to 400,000 daltons]. The weight average molecular weight can be determined by GPC techniques that are know in the art. The required amount of FLA for the desired composition of the present application is in a range of from about 0 kg/m³ [0 *ppb*] to about 85.50 kg/m³ [30 *ppb*]; or about 14.25 kg/m³ [5 *ppb*] to about 57.00 kg/m³ [20 *ppb*]; or about 22.80 kg/m³ [8 *ppb*] to about 42.75 kg/m³ [15 *ppb*].

According to an additional embodiment of the present application, it is contemplated to employ optionally at least one rheology modifying agents that are known in the art. The suitable rheology modifiers can include, but not limited to, crosslinked, linear poly(vinyl amide/polymerizable carboxylic acid) copolymer; poly(vinylpyrrolidone/acrylic acid); poly [vinyl pyrrolidone (VP)/acrylic acid(AA)] copolymer; terpolymer of acrylamide (AM)/2-acrylamido-2-methyl propanesulfonic acid (AMPS)/hydrophobe; terpolymer of acrylamide (AM)/2-acrylamido-2-methyl propanesulfonic acid (AMPS)/C₁₂₋₂₅ alkyl acrylate; carboxymethyl cellulose; hydroxyethylcellulose; carboxymethylhydroxyethyl cellulose; sulphoethylcellulose; starch derivatives/crosslinked starch derivatives including carboxymethyl starch, hydroxyethylstarch, hydroxypropyl starch; bacterial gums including xanthan, welan, diutan, succinoglycan, scleroglucan, dextran, pullulan; plant derived gums such as guar gum, locust-bean gum, tara gum and their derivatives; polyanionic cellulose (PAC); hydroxyethyl cellulose (HEC); hydroxypropyl cellulose (HPC); carboxymethyl hydroxyethyl cellulose (CMHEC); carboxymethyl cellulose (CMC); xanthan gum; guar gum; and mixtures thereof.

The water based fluids compositions of the present application is suitable for high-temperature high-pressure (HTHP) drill-in/completion/workover operations having a temperature greater than (>) 121.11°C [250°F], wherein, the non-HTHP drilling operations having a temperature of ambient to about 121.11°C [250°F].

Suitable pH for these stable water based compositions of the present application is in a range of from about 6.0 to about 13.0.

The water based drill-in/completion/workover fluid compositions of the present application may comprise additional additives for improving the performance of oil-well servicing operations with respect to one or more properties. Examples of such additional additives may be selected from the group including but not limited to bactericides, detergents and emulsifiers, solid and liquid lubricants, gas-hydrate inhibitors, corrosion inhibitors, defoaming agents, scale inhibitors, enzymes, oxidizing polymer-breakers, emulsified hydrophobic liquids such as oils, acid gas-scavengers (such as hydrogen sulfide scavengers), thinners (such as lignosulfonates), demulsifying agents and surfactants designed to assist the clean-up of invaded fluid from producing formations, polymeric additives, dispersants, shale stabilizers or inhibitors, pH controlling agents, wetting agents, biopolymers, pH controlling agents or mixture thereof. Preferred additives can include polymeric additives, filtration control additives, dispersants, shale stabilizers or inhibitors, clay swell inhibitors, pH controlling agents or buffers, emulsifiers, antifoaming agents, wetting agents, surfactants, corrosion inhibitors, lubricants, biocides or mixture thereof.

Further, it is contemplated that crosslinked polyvinylpyrrolidone of the present application can advantageously be employed in various other possible oil and gas field applications including but not limited to rheology modifier/thickener/suspension agent for drilling/drill-in/packer fluids, cementing viscosifier, friction reducer in brine/salt/saline based drilling operations, friction reducer in oil-well fracturing, shale swell inhibitor/clay stabilizer, fluid loss additive, viscosifier in seawater/saline/brine based drilling fluids, filtration control, viscosifier for oil-well stimulation, drilling-aids for oil/water/geological drillings, completion fluids and workover fluids, invert-drilling fluids, and/or polymer flooding for enhanced oil recovery.

According to an inventive embodiment of the present application, it provides a method for drilling into a producing zone with limited formation damage in a subterranean formation, comprising the steps of: (a) drilling a borehole into a formation adjacent to the producing zone; (b) circulating the water based HTHP fluid composition of any one of claims 1-11 in the bore hole; and (c) drilling into the producing zone while continuing step (b).

Another inventive embodiment of the present application discloses a method for conducting a completion operation in a subterranean formation, comprising using the water based HTHP fluid composition in the completion operation, wherein the completion operation is cementing a borehole, wherein the completion operation comprises isolating or consolidating a narrow gradient zone in the formation.

Further, the present invention is illustrated in detail by way of the below given examples. The examples are given herein for illustration of the invention and are not intended to be limiting thereof.

### EXAMPLE 1

Drill-in/completion/workover fluids as described in Table 1 were made on a 350ml scale containing (i) crosslinked PVP polymer (FlexiThix™, available from Ashland Inc.) (ii) 20% brine solution comprising NaBr, CaCl₂ or CaBr₂; and (iii) 50% NaOH as a pH adjusting agent. Sufficient mixing was required to facilitate dissolving of the polymer and avoid local viscosified agglomerates (fish eyes). The completion and workover fluids were allowed to agitate for 5 to 15 minutes between the addition of each component and with 30 to 50 minutes total for complete and homogenous mixing. Rheological (thickening) properties were then measured on a Fann 35 before and after hot rolling (BHR and AHR) aging tests.

The drill-in/completion/workover fluids prepared were hot rolled under N₂ pressure of 2.41 MPa [350 *psi*] at 204.44°C [400°F] for 16 hours aging. BHR and AHR rheology or thickening results are provided in Table 1.

**Table 1: Thermal Stability of Crosslinked PVP in Various Brines for Completion and Workover Fluids Compositions**

| **Composition** | **Mixing time** | **12503-128-1** | | | **12503-128-3** | | |
|---|---|---|---|---|---|---|---|
| 20% NaBr, ml | - | 340 | | | - | | |
| 20% CaCl₂, ml | - | - | | | 340 | | |
| 20% CaBr₂, ml | - | - | | | - | | |
| NaOH, 50%, | 30 sec | 2 drops | | | 2 drops | | |
| crosslinked PVP, kg/m³ [*ppb*] | 20min | 28.50 [10] | | | 27.08 [9.5] | | |
| **Aging condition** | | **204.44°C [400°F]/16hr hot rolling** | | | | | |
| **Density, kg/m3 [*ppg*]** | | ∼1210.24 [10.1] | | | ∼1234.21 [10.3] | | |

| Fann data @48.89°C [120°F] | | **BHR** | **AHR** | **Ret.*** | **BHR** | **AHR** | **Ret.*** |
|---|---|---|---|---|---|---|---|
| | | | | **(%)** | | | **(%)** |
| 600 *rpm* | | 84 | 90 | 107 | 78 | 77 | 99 |
| 300 *rpm* | | 61 | 61 | 100 | 56 | 54 | 96 |
| 200 *rpm* | | 51 | 46 | 90 | 45 | 44 | 98 |
| 100 *rpm* | | 31 | 32 | 103 | 32 | 32 | 100 |
| 6 *rpm* | | 12 | 9 | 75 | 9.5 | 11 | 116 |
| 3 *rpm* | | 10 | 8.5 | 85 | 8 | 10 | 125 |
| 10s gel, kg/m² [lb/100ft²] | | 0.41 [8.5] | 0.41 [8.5] | 4.88 [100] | 0.29 [6] | 0.46 [9.5] | 7.71 [158] |
| PV, mPas [*cps*] | | 23 [23] | 29 [29] | 126 [126] | 22 [22] | 23 [23] | 105 [105] |
| YP, kg/m² [lb/100ft²] | | 1.85 [38] | 1.56 [32] | 4.10 [84] | 1.66 [34] | 1.51 [31] | 4.44 [91] |
| pH value | | 10.1 | 7.6 | -- | 9.7 | 9.1 | -- |

| | | | | | | | |
|---|---|---|---|---|---|---|---|
| Ret*: Retention rate (%); AHR: After Hot Rolling 16 hrs at 204.44°C [400 °F]; 20% NaBr was made by dissolving 160 g NaBr in 640 g of water; 20% CaCl₂ was made by dissolving 160 g CaCl₂ in 640 g of water; 20% CaBr₂ was made by dissolving 160 g CaBr₂ in 640 g of water. | | | | | | | |

| **Composition** | **Mixing time** | **12503-128-4** | | |
|---|---|---|---|---|
| 20% NaBr, ml | - | - | | |
| 20% CaCl₂, ml | - | - | | |
| 20% CaBr₂, ml | - | 340 | | |
| NaOH, 50%, | 30 sec | 2drops | | |
| crosslinked PVP, kg/m³ [*ppb*] | 20min | 25.65 [9] | | |
| **Aging condition** | | **204.44°C [400°F]/16hr** hot **rolling** | | |
| **Density, kg/m³ [*ppg*]** | | ∼1234.21 [10.3] | | |

| Fann data @48.89°C [120°F] | | **BHR** | **AHR** | **Ret.*** |
|---|---|---|---|---|
| | | | | **(%)** |
| 600 *rpm* | | 70 | 49 | 70 |
| 300 *rpm* | | 50 | 32 | 64 |
| 200 *rpm* | | 41 | 25 | 61 |
| 100 *rpm* | | 29 | 17 | 59 |
| 6 *rpm* | | 9.5 | 5 | 53 |
| 3 *rpm* | | 8.5 | 4 | 47 |
| 10s gel, kg/m² [lb/100ft²] | | 0.34 [7] | 0.17 [3.5] | 2.44 [50] |
| PV, mPas [*cps*] | | 20 [20] | 17 [17] | 85 [85] |
| YP, kg/m2 [lb/100ft²] | | 1.46 [30] | 0.73 [15] | 2.44 [50] |
| pH value | | 9.3 | 7.0 | -- |

| | | | | |
|---|---|---|---|---|
| Ret*: Retention rate (%); AHR: After Hot Rolling 16 hrs at 204.44°C [400 °F]; 20% NaBr was made by dissolving 160 g NaBr in 640 g of water; 20% CaCl₂ was made by dissolving 160 g CaCl₂ in 640 g of water; 20% CaBr₂ was made by dissolving 160 g CaBr₂ in 640 g of water. | | | | |

Table 1 demonstrates that crosslinked PVP is very thermally stable in the presence of 20% NaBr and CaCl₂. After aging, the rheologies are greatly retained with high 3/6 *rpm* viscosities, showing a good suspension capability. Crosslinked PVP in 20% CaBr₂ also maintains thermal stability to a certain extent. The (i) thermal stability and (ii) good rheology retention makes crosslinked PVP suitable for HTHP completion and workover fluids.

Drill-in/completion/workover fluids as described in Table 2 were made on a 350ml scale containing (i) about 25.65 to 28.50 kg/m³ [9 to 10 *ppb*] crosslinked PVP polymer (FlexiThix™, available from Ashland Inc.); (ii) 20% brine solution of NaBr, CaCl₂ or CaBr₂; and (iii) CaCO₃. 50% NaOH was used as a pH adjusting agent. Sufficient mixing was required to facilitate dissolving of the polymer and avoid local viscosified agglomerates (fish eyes). The completion and workover fluids were allowed to agitate for 5 to 15 minutes between the addition of each component and with 30 to 50 minutes total for complete and homogenous mixing. Rheological (thickening) properties were then measured on a Fann 35 before and after hot rolling (BHR and AHR) aging tests.

The drill-in/completion/workover fluids prepared were hot rolled under N₂ pressure of 2.41 MPa [*350 psi*] at 204.44°C [400°F] for 16 hours aging. BHR and AHR rheology or thickening results are provided in Table 2.

**Table 2: Thermal Stability of Crosslinked PVP in Various Brines/CaCO₃ from Drill-in, Completion and Workover Fluids Compositions**

| **Composition** | **Mixing time** | **12503-132-1** | | | **12503-137-3** | | |
|---|---|---|---|---|---|---|---|
| 20% NaBr, ml | - | 340 | | | - | | |
| 20% CaCl₂, ml | - | - | | | 340 | | |
| 20% CaBr₂, ml | - | - | | | - | | |
| 40% CaBr₂, ml | - | - | | | - | | |
| NaOH, 50%, | 30 sec | 2 drops | | | 2 drops | | |
| Crosslinked PVP, kg/m³ [*ppb*] | 20min | 28.50 [10.0] | | | 27.08 [9.5] | | |
| CaCO₃, 25 µm [25micron], kg/m³ [*ppb*] | 10min | 114.00 [40] | | | 114.00 [40] | | |
| **Aging condition** | | **204.44°C [400°F]/16hr hot rolling** | | | | | |
| **Density, kg/m³ [*ppg*]** | | **∼1318.09 [11]** | | | **∼1318.09 [11]** | | |

| Fann data@48.89°C [120°F] | | **BHR** | **AHR** | **Ret*** | **BHR** | **AHR** | **Ret*** |
|---|---|---|---|---|---|---|---|
| | | | | **(%)** | | | **(%)** |
| 600 *rpm* | | 94 | 56 | 60 | 95 | 69 | 73 |
| 300 *rpm* | | 72 | 39 | 54 | 71 | 48 | 68 |
| 200 *rpm* | | 60 | 32 | 53 | 59 | 39 | 66 |
| 100 *rpm* | | 44 | 22 | 50 | 42 | 27 | 64 |
| 6 *rpm* | | 16 | 6 | 38 | 15 | 7 | 47 |
| 3 *rpm* | | 14 | 5 | 36 | 14 | 6 | 43 |
| 10s gel, kg/m² [lb/100ft²] | | 0.59 [12] | 0.24 [5] | 2.05 [42] | 0.54 [11] | 0.24 [5] | 2.20 [45] |
| PV, mPas [*cps*] | | 22 [22] | 17 [17] | 77 [77] | 24 [24] | 21 [21] | 88 [88] |
| YP, kg/m² [lb/100ft²] | | 2.44 [50] | 1.07 [22] | 2.15 [44] | 2.29 [47] | 1.32 [27] | 2.78 [57] |
| pH value | | 9.5 | 6.8 | -- | 9.7 | 6.4 | -- |

| **Composition** | **Mixing time** | **12503-132-2** | | | **12503-137-2** | | |
|---|---|---|---|---|---|---|---|
| 20% NaBr, ml | - | - | | | - | | |
| 20% CaCl₂, ml | - | - | | | - | | |
| 20% CaBr₂, ml | - | 340 | | | - | | |
| 40% CaBr₂, ml | - | - | | | 340 | | |
| NaOH, 50%, | 30 sec | 2 drops | | | 2 drops | | |
| Crosslinked PVP, kg/m³ [*ppb*] | 20min | 25.65 [9.0] | | | 25.65 [9.0] | | |
| CaCO₃, 25 µm [25micron], kg/m³ [*ppb*] | 10min | 114.00 [40] | | | 114.00 [40] | | |
| **Aging condition** | | | | | | | |
| **Density, kg/m³ *[ppg]*** | | **∼1318.09 [11]** | | | **∼1449.89 [12.1]** | | |

| Fann data@48.89°C [120°F] | | **BHR** | **AHR** | **Ret*** | **BHR** | **AHR** | **Ret*** |
|---|---|---|---|---|---|---|---|
| | | | | **(%)** | | | **(%)** |
| 600 *rpm* | | 77 | 69 | 90 | 88 | 76 | 86 |
| 300 *rpm* | | 54 | 47 | 87 | 61 | 52 | 85 |
| 200 *rpm* | | 44 | 36 | 82 | 49 | 41 | 84 |
| 100 *rpm* | | 31 | 23.5 | 76 | 33 | 28 | 85 |
| 6 *rpm* | | 10 | 6 | 60 | 9 | 6 | 67 |
| 3 *rpm* | | 9 | 5 | 56 | 8 | 5 | 63 |
| 10s gel, kg/m² [lb/100ft²] | | 0.39 [8] | 0.29 [6] | 3.66 [75] | 0.34 [7] | 0.22 [4.5] | 3.12 [64] |
| PV, mPas [*cps*] | | 23 [23] | 22 [22] | 96 [96] | 27 [27] | 24 [24] | 89 [89] |
| YP, kg/m² [lb/100ft²] | | 1.51 [31] | 1.22 [25] | 3.95 [81] | 1.66 [34] | 1.37 [28] | 4.00 [82] |
| pH value | | 9.0 | 6.1 | ---- | 9.0 | 7.9 | -- |

| | | | | | | | |
|---|---|---|---|---|---|---|---|
| *: Retention rate (%); AHR: After Hot Rolling 16 hrs at 204.44°C [400 °F]; 20% NaBr was made by dissolving 160 g NaBr in 640 g of water; 20% CaCl₂ was made by dissolving 160 g CaCl₂ in 640 g of water; 20% CaBr₂ was made by dissolving 160 g CaBr₂ in 640 g of water; 40% CaBr₂ was made by dissolving 320 g CaBr₂ in 480 g of water. *: Retention rate (%); AHR: After Hot Rolling 16 hrs at 204.44°C [400 °F]; 20% NaBr was made by dissolving 160 g NaBr in 640 g of water; 20% CaCl₂ was made by dissolving 160 g CaCl₂ in 640 g of water; 20% CaBr₂ was made by dissolving 160 g CaBr₂ in 640 g of water; 40% CaBr₂ was made by dissolving 320 g CaBr₂ in 480 g of water. | | | | | | | |

Table 2 shows that the crosslinked PVP is significantly thermally stable in the brine solution of NaBr, CaCl₂, and CaBr₂ containing CaCO₃. After aging, the rheologies are greatly retained with high 3/6 *rpm* viscosities, showing good suspension capabilities. The thermal stability and good rheology retention makes crosslinked PVP suitable for HTHP drill-in, completion and workover fluids composition and their related applications.

While this invention has been described in detail with reference to certain preferred embodiments, it should be appreciated that the present invention is not limited to those precise embodiments. Rather, in view of the present disclosure, which describes the current best mode for practicing the invention, many modifications and variations can present themselves to those skilled in the art.

## Claims

1. A water based High-Temperature High-Pressure (HTHP) fluid composition having a density of 994.56 to 2516.35 kg/m³ [8.3 to 21.0 ppg], comprising:
i. a brine based fluid;
ii. 1.43 kg/m³ [0.5 ppb] to 57.00 kg/m³ [20 ppb] of crosslinked polyvinylpyrrolidone (PVP);
iii. 14.25 kg/m³ [5 ppb] to 285.00 kg/m³ [100 ppb] of bridging agents selected from the group consisting of CaCO₃ and sized salts; and
iv. optionally 0 kg/m³ [0 ppb] to 71.25 kg/m³ [25 ppb] of Fluids Loss Additives (FLA),
wherein the crosslinked PVP is prepared by precipitation polymerization of vinylpyrrolidone (VP) in an organic solvent in the presence of a crosslinking agent and a free radical polymerization initiator, wherein the crosslinking agent is present in an amount of from 0.1 wt. % to 5.0 wt. % based on the weight of the vinylpyrrolidone.

2. The water based HTHP fluid composition according to claim 1, wherein
- the fluid composition is employed as a drill-in fluid composition, a completion fluid composition or a workover fluid composition; or
- the brine based fluid is selected from the group consisting of sodium chloride, potassium chloride, calcium chloride, magnesium chloride, ammonium chloride, zinc chloride, sodium bromide, calcium bromide, zinc bromide, potassium formate, cesium formate, sodium formate, and combinations thereof.

3. The water based HTHP fluid composition according to any one of claims 1-2 being suitable for high-temperature high-pressure (HTHP) drill-in, workover or completion operations having a temperature of 121.11°C [250°F] or above.

4. The water based HTHP fluid composition according to any one of claims 1-3 having a pH of from 6.0 to 13.0.

5. The water based HTHP fluid composition according to any one of claims 1-4, wherein the crosslinked PVP is in the form of fine white powder.

6. The water based HTHP fluid composition according to any one of claims 1-4, wherein the crosslinked PVP is totally dissolved into solution.

7. The water based HTHP fluid composition according to claim 1, wherein the precipitation polymerization temperature is varied from 40° to 150 °C.

8. The water based HTHP fluid composition according to claim 1, wherein the organic solvent comprises an aliphatic hydrocarbon having a C₃-C₁₀ saturated hydrocarbon, branched or unbranched, cyclic or acylic, or mixtures thereof.

9. The water based HTHP fluid composition according to claim 1, wherein the precipitation polymerization is conducted at 10-50 wt% solids.

10. The water based HTHP fluid composition according to claim 1, wherein the crosslinking agent comprises at least two olefinic double bonds.

11. The water based HTHP fluid composition according to claim 10, wherein the crosslinking agent is selected from the group consisting of N,N' -divinylimidazolidone (DVI), N,N',N"-triallyl-triazine-trione, methyene-bis-acryamide, methylene-bis-(meth)acrylamide, triallyl amine, triallylglucose, ethyleneglycol-di-(meth)acrylate, diethyleneglycol-di-(meth)acrylate, triethyleneglycol-di-(meth)acrylate, tetraethyleneglycol-di-(meth)acrylate, polyethyleneglycol-di-(meth)acrylate, pentaerythritol-tri-allylether, pentaerythritol-di-allylether, pentaerythritol-tetra-allylether, pentaerythritol-di-(meth)acrylate, pentaerythritol-tri(meth)acrylate, pentaerythritol-tetra-(meth)acrylate, 1-vinyl-3-(E)-ethylidene-pyrrolidone (EVP), allyl methacrylamide, allyl glycidyl ether, glycidyl acrylate, hydroxy acrylamide, triallyl-1,3,5-triazine-2,4,6(1H,3H,5H)-trione, 2,4,6-triallyloxy-1,3,5-triazine and divinylbenzene, and combinations thereof.

12. The water based HTHP fluid composition according to claim 10, wherein the crosslinking agent is selected from the group consisting of N,N'-N,N'-divinylimidazolidone (DVI), pentaerythritol-tri-allylether, triallyl-1,3,5-triazine-2,4,6(1H,3H,5H)-trione, 2,4,6-triallyloxy-1,3,5-triazine, and combinations thereof.

13. The water based HTHP fluid composition according to claim 1, wherein the free radical polymerization initiator is selected from the group consisting of
- acyl peroxides such as diacetyl peroxide, dibenzoyl peroxide, dilauryl peroxide,
- peresters such as t-butylperoxy pivalate, tert-butyl peroxy-2-ethylhexanoate,
- peroxides such as di-tert-butyl peroxide,
- percarbonates such as dicyclohexyl peroxydicarbonate,
- azo compounds such as, 2,2'-azobis(isobutyronitrile), 2,2'-azobis(2,4-dimethylvaleronitrile), 1,1'-azobis(cyanocyclohexane), 2,2'-azobis(methylbutyronitrile), and
- combinations thereof.

14. A method for drilling into a producing zone with limited formation damage in a subterranean formation, comprising the steps of:
a. drilling a borehole into a formation adjacent to the producing zone;
b. circulating the water based HTHP fluid composition of any one of claims 1-11 in the borehole; and
c. drilling into the producing zone while continuing step (b).

15. A method for conducting a completion operation in a subterranean formation, comprising using the water based HTHP fluid composition of any one of claims 1-13 in the completion operation and wherein the completion operation preferably
- is cementing a borehole; or
- comprises isolating or consolidating a narrow gradient zone in the formation.

## Patentansprüche

1. Eine wasserbasierte Hochtemperatur-Hochdruck (HTHP)-Flüssigkeitszusammensetzung mit einer Dichte von 994,56 bis 2516,35 kg/m³ [8,3 bis 21,0 ppg] umfassend:
i. eine Flüssigkeit auf Sole-Basis;
ii. 1,43 kg/m³ [0,5 ppb] bis 57,00 kg/m³ [20 ppb] vernetztes Polyvinylpyrrolidon (PVP);
iii. 14,25 kg/m³ [5 ppb] bis 285,00 kg/m³ [100 ppb] Brückenbildner ausgewählt aus der Gruppe bestehend aus CaCO₃ und geschlichteten Salzen; und
iv. gegebenenfalls 0 kg/m³ [0 ppb] bis 71,25 kg/m³ [25 ppb] Flüssigkeitsverlustadditive (FLA),
wobei das vernetzte PVP durch Fällungspolymerisation von Vinylpyrrolidon (VP) in einem organischen Lösungsmittel in Gegenwart eines Vernetzungsmittels und eines radikalischen Polymerisationsinitiators hergestellt wird, wobei das Vernetzungsmittel in einer Menge von 0,1 Gew.-% bis 5,0 Gew.-%, bezogen auf das Gewicht des Vinylpyrrolidons, vorhanden ist.

2. Die wasserbasierte HTHP-Flüssigkeitszusammensetzung gemäß Anspruch 1, wobei
- die Flüssigkeitszusammensetzung als Bohrflüssigkeitszusammensetzung, als Komplettierungsflüssigkeitszusammensetzung oder als Aufarbeitungsflüssigkeitszusammensetzung verwendet wird; oder
- die Flüssigkeit auf Sole-Basis ausgewählt wird aus der Gruppe bestehend aus Natriumchlorid, Kaliumchlorid, Kalziumchlorid, Magnesiumchlorid, Ammoniumchlorid, Zinkchlorid, Natriumbromid, Kalziumbromid, Zinkbromid, Kaliumformiat, Caesiumformiat, Natriumformiat und deren Kombinationen.

3. Die wasserbasierte HTHP-Flüssigkeitszusammensetzung gemäß einem der Ansprüche 1-2, die für Hochtemperatur-Hochdruck (HTHP)-Bohrungs-, Aufarbeitungs- oder Komplettierungsarbeiten mit einer Temperatur von 121,11°C [250°F] oder höher geeignet ist.

4. Die wasserbasierte HTHP-Flüssigkeitszusammensetzung gemäß einem der Ansprüche 1-3, die einen pH-Wert von 6,0 bis 13,0 aufweist.

5. Die wasserbasierte HTHP-Flüssigkeitszusammensetzung gemäß einem der Ansprüche 1-4, wobei das vernetzte PVP in der Form eines feinen weißen Pulvers vorliegt.

6. Die wasserbasierte HTHP-Flüssigkeitszusammensetzung gemäß einem der Ansprüche 1-4, wobei das vernetzte PVP vollständig in Lösung gelöst ist.

7. Die wasserbasierte HTHP-Flüssigkeitszusammensetzung gemäß Anspruch 1, wobei die Fällungspolymerisationstemperatur von 40 °C bis 150 °C variiert wird.

8. Die wasserbasierte HTHP-Flüssigkeitszusammensetzung gemäß Anspruch 1, wobei das organische Lösungsmittel einen aliphatischen Kohlenwasserstoff mit einem C₃-C₁₀ gesättigten Kohlenwasserstoff, verzweigt oder unverzweigt, zyklisch oder azyklisch, oder deren Mischungen umfasst.

9. Die wasserbasierte HTHP-Flüssigkeitszusammensetzung gemäß Anspruch 1, wobei die Fällungspolymerisation in Anwesenheit von 10-50 Gew.-% Feststoffen durchgeführt wird.

10. Die wasserbasierte HTHP-Flüssigkeitszusammensetzung gemäß Anspruch 1, wobei das Vernetzungsmittel wenigstens zwei olefinische Doppelbindungen umfasst.

11. Die wasserbasierte HTHP-Flüssigkeitszusammensetzung gemäß Anspruch 10, wobei das Vernetzungsmittel ausgewählt wird aus der Gruppe bestehend aus N,N'-Divinylimidazolidon (DVI), N,N',N"-Triallyltriazintrion, Methylen-bis-acrylamid, Methylen-bis-(meth)acrylamid, Triallylamin, Triallylglucose, Ethylenglycol-di-(meth)acrylat, Diethylenglycol-di-(meth)acrylat, Triethylenglycol-di-(meth)acrylat, Tetraethylenglycol-di-(meth)acrylat, Polyethylenglycol-di-(meth)acrylat, Pentaerythritol-tri-allylether, Pentaerythritol-di-allylether, Pentaerythritol-tetra-allylether, Pentaerythritol-di-(meth)acrylat, Pentaerythritol-tri(meth)acrylat, Pentaerythritol-tetra-(meth)acrylat, 1-Vinyl-3-(E)-ethyliden-pyrrolidon (EVP), Allylmethacrylamid, Allylglycidylether, Glycidylacrylat, Hydroxyacrylamid, Triallyl-1,3,5-triazin-2,4,6(1H,3H,5H)-trion, 2,4,6-Triallyloxy-1,3,5-triazin und Divinylbenzol und deren Kombinationen.

12. Die wasserbasierte HTHP-Flüssigkeitszusammensetzung gemäß Anspruch 10, wobei das Vernetzungsmittel ausgewählt wird aus der Gruppe bestehend aus N,N'-Divinylimidazolidon (DVI), Pentaerythritol-tri-allylether, Triallyl-1,3,5-triazin-2,4,6(1H,3H,5H)-trion, 2,4,6-Triallyloxy-1,3,5-triazin und deren Kombinationen.

13. Die wasserbasierte HTHP-Flüssigkeitszusammensetzung gemäß Anspruch 1, wobei der radikalische Polymerisationsinitiator ausgewählt wird aus der Gruppe bestehend aus
- Acylperoxiden wie Diacetylperoxid, Dibenzoylperoxid, Dilaurylperoxid,
- Perestern wie tert-Butylperoxypivalat, tert-Butylperoxy-2-ethylhexanoat,
- Peroxiden wie di-tert-Butylperoxid,
- Percarbonaten wie Dicyclohexylperoxydicarbonat,
- Azoverbindungen wie 2,2'-Azobis(isobutyronitril), 2,2'-Azobis(2,4-Dimethylvaleronitril), 1,1'-Azobis(cyanocyclohexan), 2,2'-Azobis(methylbutyronitril), und
- deren Kombinationen.

14. Ein Verfahren zum Bohren in eine Förderzone in einer unterirdischen Formation mit begrenzter Formationsschädigung, das die folgenden Schritte umfasst:
a. Bohren eines Bohrlochs in eine an die Förderzone angrenzende Formation;
b. Zirkulieren der wasserbasierten HTHP-Flüssigkeitszusammensetzung gemäß einem der Ansprüche 1-11 im Bohrloch; und
c. Bohren in die Förderzone während Schritt (b) fortgesetzt wird.

15. Ein Verfahren zur Durchführung einer Komplettierungsarbeit in einer unterirdischen Formation, umfassend die Verwendung der wasserbasierten HTHP-Flüssigkeitszusammensetzung gemäß einem der Ansprüche 1-13 bei der Komplettierungsarbeit und wobei die Komplettierungsarbeit vorzugsweise
- ein Bohrloch zementiert; oder
- die Isolierung oder Verfestigung einer engen Gradientenzone in der Formation umfasst.

## Revendications

1. Composition de fluide haute température haute pression (HTHP) à base d'eau possédant une densité de 994,56 à 2516,35 kg/m³ [8,3 à 21,0 ppg], comprenant :
i. un fluide à base de saumure ;
ii. 1,43 kg/m³ [0,5 ppb] à 57,00 kg/m³ [20 ppb] de polyvinylpyrrolidone réticulée (PVP) ;
iii. 14,25 kg/m³ [5 ppb] à 285,00 kg/m³ [100 ppb] d'agents de pontage choisis dans le groupe constitué par CaCO₃ et des sels calibrés ; et
iv. éventuellement 0 kg/m³ [0 ppb] à 71,25 kg/m³ [25 ppb] d'additifs pour perte de fluides (FLA),
la PVP réticulée étant préparée par polymérisation par précipitation de vinylpyrrolidone (VP) dans un solvant organique en présence d'un agent de réticulation et d'un initiateur de polymérisation par radicaux libres, l'agent de réticulation étant présent en une quantité de 0,1 % en poids à 5,0 % en poids sur la base du poids de la vinylpyrrolidone.

2. Composition de fluide HTHP à base d'eau selon la revendication 1,
- la composition de fluide étant utilisé en tant qu'une composition de fluide de forage, une composition de fluide de complétion ou une composition de fluide de reconditionnement ; ou
- le fluide à base de saumure étant choisi dans le groupe constitué par le chlorure de sodium, le chlorure de potassium, le chlorure de calcium, le chlorure de magnésium, le chlorure d'ammonium, le chlorure de zinc, le bromure de sodium, le bromure de calcium, le bromure de zinc, le formiate de potassium, le formiate de césium, le formiate de sodium, et des combinaisons correspondantes.

3. Composition de fluide HTHP à base d'eau selon l'une quelconque des revendications 1 et 2, qui est appropriée pour des opérations de forage haute température haute pression (HTHP), de reconditionnement ou de complétion possédant une température de 121,11 °C [250 °F] ou plus.

4. Composition de fluide HTHP à base d'eau selon l'une quelconque des revendications 1 à 3 possédant un pH de 6,0 à 13,0.

5. Composition de fluide HTHP à base d'eau selon l'une quelconque des revendications 1 à 4, la PVP réticulée se trouvant sous forme d'une fine poudre blanche.

6. Composition de fluide HTHP à base d'eau selon l'une quelconque des revendications 1 à 4, la PVP réticulée étant totalement dissoute dans la solution.

7. Composition de fluide HTHP à base d'eau selon la revendication 1, la température de la polymérisation par précipitation variant de 40° à 150 °C.

8. Composition de fluide HTHP à base d'eau selon la revendication 1, le solvant organique comprenant un hydrocarbure aliphatique possédant un hydrocarbure saturé en C₃₋₁₀, ramifié ou non ramifié, cyclique ou acyclique, ou des mélanges correspondants.

9. Composition de fluide HTHP à base d'eau selon la revendication 1, la polymérisation par précipitation étant réalisée à raison de 10 à 50 % en poids de solides.

10. Composition de fluide HTHP à base d'eau selon la revendication 1, l'agent de réticulation comprenant au moins deux doubles liaisons oléfiniques.

11. Composition de fluide HTHP à base d'eau selon la revendication 10, l'agent de réticulation étant choisi dans le groupe constitué par N,N'-divinylimidazolidone (DVI), N,N',N"-triallyl-triazine-trione, méthylène-bis-acryamide, méthylène-bis-(méth)acrylamide, triallylamine, triallylglucose, di-(méth)acrylate d'éthylèneglycol, di-(méth)acrylate de diéthylèneglycol, di-(méth)acrylate de triéthylèneglycol, di-(méth)acrylate de tétraéthylèneglycol, di-(méth)acrylate de polyéthylèneglycol, pentaérythritol-tri-allyléther, pentaérythritol-di-allyléther, pentaérythritol-tétra-allyléther, di-(méth)acrylate de pentaérythritol, tri(méth)acrylate de pentaérythritol, tétra-(méth)acrylate de pentaérythritol, 1-vinyl-3-(E)-éthylidène-pyrrolidone (EVP), allylméthacrylamide, allylglycidyléther, acrylate de glycidyle, hydroxyacrylamide, triallyl-1,3,5-triazine-2,4,6(1H,3H,5H)-trione, 2,4,6-triallyloxy-1,3,5-triazine et divinylbenzène, et des combinaisons correspondantes.

12. Composition de fluide HTHP à base d'eau selon la revendication 10, l'agent de réticulation étant choisi dans le groupe constitué par N,N'-N,N'-divinylimidazolidone (DVI), pentaérythritol-tri-allyléther, triallyl-1,3,5-triazine-2,4,6(1H,3H,5H)-trione, 2,4,6-triallyloxy-1,3,5-triazine, et des combinaisons correspondantes.

13. Composition de fluide HTHP à base d'eau selon la revendication 1, l'initiateur de polymérisation par radicaux libres étant choisi dans le groupe constitué par
- des peroxydes d'acyle tels que le peroxyde de diacétyle, le peroxyde de dibenzoyle, le peroxyde de dilauryle,
- des peresters tels que le peroxypivalate de t-butyle, le peroxy-2-éthylhexanoate de tert-butyle,
- des peroxydes tels que le peroxyde de di-tert-butyle,
- des percarbonates tels que le peroxydicarbonate de dicyclohexyle,
- des composés azo tels que le 2,2'-azobis(isobutyronitrile), le 2,2'-azobis(2,4-diméthyvaléronitrile), le 1,1'-azobis(cyanocyclohexane), le 2,2'-azobis(méthylbutyronitrile), et
- des combinaisons correspondantes.

14. Procédé pour le forage dans une zone de production comportant des dégâts de formation limités dans une formation souterraine, comprenant les étapes de :
a. forage d'un puits de forage dans une formation adjacente à la zone de production ;
b. circulation de la composition de fluide HTHP à base d'eau selon l'une quelconque des revendications 1 à 11 dans le puits de forage ; et
c. forage dans la zone de production tout en continuant l'étape (b).

15. Procédé pour la conduite d'une opération de complétion dans une formation souterraine, comprenant l'usage de la composition de fluide HTHP à base d'eau selon l'une quelconque des revendications 1 à 13 dans l'opération de complétion et l'opération de complétion préférablement
- étant la cimentation d'un puits de forage ; ou
- comprenant l'isolation ou la consolidation d'une zone de gradient étroite dans la formation.
